(19) Europäisches Patentamt
European Patent Office
Office européen des brevets

(11) **EP 2 695 253 B1**

(12) **FASCICULE DE BREVET EUROPEEN**

(45) Date de publication et mention de la délivrance du brevet:
**29.05.2019 Bulletin 2019/22**

(21) Numéro de dépôt: **12717878.8**

(22) Date de dépôt: **04.04.2012**

(51) Int Cl.:
*H01S 3/067* (2006.01)     *H01S 3/0941* (2006.01)
*H01S 3/11* (2006.01)      *H01S 3/08* (2006.01)
*H01S 3/094* (2006.01)

(86) Numéro de dépôt international:
**PCT/IB2012/051657**

(87) Numéro de publication internationale:
**WO 2012/137145 (11.10.2012 Gazette 2012/41)**

(54) **OSCILLATEUR LASER A FIBRE OPTIQUE**

OPTISCHER  FASERLASER

OPTICAL  FIBER  LASER

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **05.04.2011 FR 1152937**

(43) Date de publication de la demande:
**12.02.2014 Bulletin 2014/07**

(73) Titulaires:
- **Centre National de la Recherche Scientifique**
  **75016 Paris (FR)**
- **Universite de Rouen**
  **76821 Mont-Saint-Aignan Cédex (FR)**
- **Université de Limoges**
  **87032 Limoges (FR)**

(72) Inventeurs:
- **HIDEUR, Ammar**
  **76140 Le Petit Quevilly (FR)**
- **FEVRIER, Sébastien**
  **87110 Bosmie-L'Aiguille (FR)**
- **ROY, Philippe**
  **87100 Limoges (FR)**

- **LECAPLAIN, Caroline**
  **76000 Rouen (FR)**

(74) Mandataire: **Bréda, Jean-Marc**
**Marks & Clerk France**
**Immeuble Visium**
**22, avenue Aristide Briand**
**FR-94117 Arcueil Cedex (FR)**

(56) Documents cités:
**WO-A2-01/50639     WO-A2-2008/105833**

- **XIAOHUI FANG ET AL: "High pulse energy mode-locked multicore photonic crystal fiber laser", OPTICS LETTERS, OSA, OPTICAL SOCIETY OF AMERICA, WASHINGTON, DC, US, vol. 36, no. 6, 15 mars 2011 (2011-03-15), pages 1005-1007, XP001561131, ISSN: 0146-9592, DOI: 10.1364/OL.36.001005 [extrait le 2011-03-15]**
- **AUGUSTE J-L ET AL: "1800 ps/(nm.km) chromatic dispersion at 1.55 [micro]m in dual concentric core fibre", ELECTRONICS LETTERS, IEE STEVENAGE, GB, vol. 36, no. 20, 28 septembre 2000 (2000-09-28), pages 1689-1691, XP006015785, ISSN: 0013-5194, DOI: 10.1049/EL:20001236**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

L'invention porte sur un oscillateur laser à fibre optique. Plus précisément, l'invention concerne un oscillateur laser pouvant fonctionner en régime de verrouillage des modes pour générer des impulsions ultra-brèves de haute énergie.

On entend par « impulsions ultra-brèves », ou « ultra-rapides », des impulsions « picosecondes » ou « femtosecondes ».

On entend par impulsions picosecondes (femtosecondes) des impulsions présentant une durée à mi-hauteur inférieure ou égale à 500 ps (500 fs, respectivement), cette durée pouvant être mesurée directement à la sortie de l'oscillateur ou après une opération de compensation de la dérive de fréquence (« chirp » en anglais) par des moyens dispersifs.

On entend par « impulsions de haute énergie » des impulsions présentant, à la sortie de l'oscillateur et avant toute amplification hors cavité, une énergie supérieure ou égale à 100 nJ, voire à 1 $\mu$J.

Les impulsions lasers ultra-rapides de haute énergie sont utilisées dans des nombreuses applications scientifiques, industrielles ou médicales. A titre d'exemples non limitatifs on peut mentionner la microscopie non-linéaire, la génération d'harmoniques d'ordre élevé, l'imagerie résolue en temps, le micro-usinage de précision et la chirurgie ophtalmique.

Actuellement, les meilleures performances sont obtenues grâce à des lasers femtosecondes massifs à base de Ti:saphir, qui permettent d'atteindre des durées d'impulsions aussi faibles que 5 fs. Cependant, ces lasers souffrent de nombreux inconvénients qui les rendent peu adaptés à des applications industrielles : en effet, ils sont relativement encombrants, coûteux, consommateurs d'énergie et présentent des problèmes de stabilité à long terme. Ils doivent être pompés optiquement par une lumière verte, généralement émise par des lasers à ions d'argon ou à état solide avec conversion de fréquence, qui sont à leur tour coûteux. Par ailleurs, des effets thermo-optiques limitent leur puissance et leur cadence. En outre, l'énergie à la sortie de l'oscillateur ne dépasse pas en général quelques dizaines, voire quelques centaines de nanojoules ; ainsi, une amplification hors cavité est nécessaire pour de nombreuses applications, ce qui augmente ultérieurement le coût et l'encombrement du système.

Les lasers « à disques minces », introduits récemment (voir le document EP1236249) constituent une alternative intéressante, au moins pour les applications ne nécessitant pas d'impulsions extrêmement brèves. Ces lasers ont permis de générer des impulsions de durée inférieure à 800 fs et d'énergie supérieure à 2 $\mu$J en sortie de l'oscillateur, à une cadence de 60 MHz. Ils présentent l'avantage considérable de pouvoir être pompés par des lasers semi-conducteurs (diodes lasers). Cependant, l'utilisation d'un milieu actif en forme de disque mince complique la géométrie de la cavité et le pompage.

Les lasers à fibre, dont le milieu à gain optique est constitué par une fibre optique dopée, généralement avec des ions de terres rares, sont économiques, compacts, robustes et stables ; ils peuvent être pompés facilement par diodes lasers ; leur grand rapport surface-volume simplifie la gestion thermique ; ils présentent un fort gain qui permet un fonctionnement à haute cadence avec une puissance moyenne importante ; en outre, ils émettent des impulsions présentant une qualité spatiale élevée. L'énergie des impulsions en sortie de l'oscillateur est néanmoins limitée par les fortes non-linéarités effectives qui caractérisent les fibres optiques. La génération d'impulsions de haute énergie nécessite donc, généralement, une amplification hors cavité, ce qui conduit à des systèmes trop complexes pour des applications industrielles.

Lors de sa propagation dans une fibre optique, une impulsion est soumise - si on néglige dans un premier temps son amplification ou atténuation - à la dispersion de sa vitesse de groupe (effet dispersif d'ordre 2) et à l'effet Kerr optique (non-linéarité d'ordre 3). L'évolution, en fonction de la distance parcourue z et du temps t, de l'amplitude complexe A de son enveloppe est alors décrite par l'équation suivante, connue sous le nom d' « équation de Schrôdinger non-linéaire » :

$$i\frac{\partial A}{\partial z} = \frac{\beta_2}{2}\frac{\partial^2 A}{\partial t^2} - \gamma|A|^2 A$$

dans laquelle :

- $\beta_2$ est le coefficient de dispersion de la vitesse de groupe ; il est donné par $\beta_2 = \frac{d^2\beta}{d\omega^2}$, $\omega$ étant la fréquence angulaire et $\beta$ la constante de propagation de la lumière. On utilise plus communément le paramètre de dispersion chromatique $D_c = -2\pi c\beta_2/\lambda^2$ où c est la célérité de la lumière dans le vide et $\lambda$ est la longueur d'onde reliée à $\omega$ par $\omega = 2\pi c/\lambda$. Le paramètre $D_c$ est généralement exprimé en ps/(nm·km). Lorsque $\beta_2 < 0$ ($D_c > 0$), on parle de dispersion négative ou anormale ; lorsque $\beta_2 > 0$ ($D_c < 0$), on parle de dispersion positive ou normale.

- $\gamma$ représente la non-linéarité effective de la fibre, donnée par $\gamma = \dfrac{n_2 \omega_0}{c A_{eff}}$ où : $n_2$ est l'indice de réfraction non-linéaire, $\omega_0$ la fréquence angulaire de la porteuse de l'impulsion, c la vitesse de la lumière et $A_{eff}$ la surface effective du mode de la fibre optique (surface modale effective) à la fréquence angulaire $\omega_0$ définie par :

$$A_{eff} = \frac{\left[\iint_{-\infty}^{+\infty} E(x,y)^2 dS\right]^2}{\iint_{-\infty}^{+\infty} E(x,y)^4 dS}$$

où E(x,y) représente la distribution de champ électrique du mode considéré sur la section transverse de la fibre optique.

Lorsque la dispersion est anormale, il existe des profils d'impulsions pour lesquels les effets non-linéaires et dispersifs s'annulent exactement : les solitons. Malheureusement, les solitons ne sont stables que pour des énergies inférieures à la valeur limite $E_s = \dfrac{1}{T_s} \dfrac{2|\beta_2|}{\gamma}$, $T_s$ étant la durée de l'impulsion (théorème de l'aire du soliton). Concrètement, les oscillateurs laser solitoniques utilisant des fibres optiques conventionnelles en silice ne peuvent générer que des impulsions ayant une énergie inférieure à 0,1 nJ environ. On entend par « fibre conventionnelle » une fibre optique unimodale sans gestion particulière de la dispersion chromatique ou de la surface modale effective.

Les lasers à fibre à gestion de la dispersion permettent de dépasser la limite imposée par le théorème de l'aire du soliton. La cavité de ces lasers comprend une fibre optique amplificatrice à dispersion anormale, comme dans un oscillateur solitonique, mais également une section présentant une dispersion normale qui étire les impulsions afin de limiter les non-linéarités induites. A titre d'exemple, le document US 5,450,427 et l'article [Lenz 1995] décrivent un oscillateur à gestion de la dispersion dans lequel la dispersion normale (négative) est introduite par un réseau de Bragg non uniforme. De cette façon, on peut atteindre des énergies à la sortie de l'oscillateur de quelques nano-Joules, ce qui reste insuffisant pour de nombreuses applications.

Le document US 5,513,194 décrit un oscillateur laser à gestion de la dispersion entièrement intégré en fibre optique. Dans cet oscillateur, la fibre amplificatrice présente une dispersion normale, qui est compensée par une fibre passive à dispersion anormale. La fibre amplificatrice est en silice dopée à l'erbium ; elle présente donc un gain optique à une longueur d'onde (1,55 $\mu$m) à laquelle la silice présente une dispersion anormale. Dans ces conditions, pour pouvoir présenter une dispersion normale, la fibre doit être du type à dispersion décalée, et présenter de ce fait une surface modale très faible, ce qui limite l'énergie maximale des impulsions.

Afin d'éviter les contraintes associées à l'utilisation des fibres amplificatrices à dispersion anormale, il a été proposé de réaliser des lasers exploitant le concept de « similariton ». Les « similaritons » sont des impulsions de profil temporel parabolique (« impulsions paraboliques ») qui, au cours de leur propagation dans un milieu à dispersion normale, s'élargissent sans se déformer. Un laser à impulsions paraboliques comprend une fibre amplificatrice à dispersion normale et une ligne à retard dispersive pour comprimer les impulsions élargies dans la fibre amplificatrice sans introduire des non-linéarités additionnelles. Un tel laser est décrit, par exemple, dans l'article [Ilday 2004] et dans le document US 7,436,862. L'énergie à la sortie de l'oscillateur ne dépasse pas quelques nano-Joules.

Les lasers à fibre « à dispersion totalement normale » (« ANDI », de l'anglais « All-Normal Dispersion », ou « ANDF », pour « All-Normal Dispersion Fiber ») comprennent également une fibre amplificatrice à dispersion normale, mais ne prévoient aucun élément de compensation de la dispersion. L'élargissement des impulsions est compensé par l'absorbant saturable rapide responsable du verrouillage des modes (qui raccourcit les impulsions en atténuant fortement leurs queues), assisté éventuellement par un filtrage spectral (les impulsions présentent une forte dérive de fréquence, ce qui fait qu'un filtrage spectral en réduit la durée, contrairement à ce qui se passe pour des impulsions limitées par transformée de Fourier). Le principe de fonctionnement d'un tel oscillateur laser est décrit, par exemple, dans le document WO 2008/105833.

Lorsqu'on utilise des fibres optiques amplificatrices conventionnelles, les oscillateurs laser à dispersion totalement normale génèrent des impulsions dont l'énergie ne dépasse pas 20 nJ environ (voir par exemple [Chichkov 2010]). Cependant, cette valeur peut être augmentée en utilisant des fibres optiques amplificatrices à grande surface modale, du type à cristal photonique. Voir par exemple l'article [Ortaç 2009], dans lequel une fibre-barreau à cristal photonique avec une surface modale effective de 2800 $\mu$m$^2$ (à comparer aux quelques micromètres carrés des fibres optiques conventionnelles) dopée à l'ytterbium a permis l'obtention d'impulsions présentant une énergie de 927 nJ et une durée de 711 fs (après compensation de la dérive linéaire de fréquence) à la longueur d'onde de 1,04 $\mu$m. Cependant, la fibre-barreau utilisée dans l'oscillateur décrit dans cet article est multimodale et nécessite donc l'utilisation d'un filtre spatial pour sélectionner le mode fondamental, compliquant ainsi l'architecture de l'oscillateur.

Une fibre-barreau à cristal photonique (PCF) unimodale à large aire effective de 1320 $\mu m^2$ a pu être obtenue en augmentant le pas de la structure périodique à deux dimensions inscrite dans la gaine. L'utilisation de cette fibre à grand pas dans un oscillateur à verrouillage de modes a permis l'obtention d'impulsions présentant une énergie de 534 nJ et une durée de 100 fs ([Baumgartl 2011]).

De manière similaire, l'article [Fang 2006] décrit une fibre optique PCF à 18 coeurs permettant d'opérer en régime blocage de mode en régime ANDI avec une large aire effective de 2100 $\mu m^2$. L'utilisation de cette fibre à grand pas dans un oscillateur a permis l'obtention d'impulsions présentant une énergie de 180 nJ et une durée de 1,15 ps.

L'utilisation de fibres-barreaux à cristal photonique présente néanmoins certains inconvénients.

Premièrement, ces fibres sont rectilignes et rigides : on perd donc un des avantages majeurs des lasers à fibre optique, à savoir leur compacité. Elles sont aussi fragiles et coûteuses à fabriquer.

Ensuite, le signe de leur dispersion est déterminé par la nature du matériau, la dispersion due au guidage étant négligeable. Cela signifie qu'on ne peut pas utiliser une fibre en silice pour des oscillateurs émettant à des longueurs d'ondes supérieures à 1,27 $\mu m$, ce qui exclut notamment la possibilité d'utiliser un dopage à l'erbium $Er^{3+}$ (émission autour de 1,55 $\mu m$) ou au thulium $Tm^{3+}$ (émission autour de 2 $\mu m$). L'utilisation d'autres matériaux que la silice (verres de fluorure, chalcogénure, tellure...) pose des problèmes d'intégrabilité avec les fibres conventionnelles et les composants à fibre de silice.

En outre, l'énergie maximale admissible dépend linéairement de la surface modale effective, qui en pratique ne peut pas excéder quelques milliers de micromètres carrés. Ces types de lasers ne présentent donc que peu de marges de progression en énergie.

L'invention vise à remédier, entièrement ou en partie, aux inconvénients précités de l'art antérieur. Notamment, l'invention vise à procurer un laser à fibre optique pouvant générer des impulsions ultra-brèves de plus haute énergie que les oscillateurs lasers à fibre connus de l'art antérieur et/ou présentant une structure plus simple et compacte, par exemple en étant entièrement intégrable dans un système « tout fibre », et/ou susceptible d'émettre un rayonnement laser à une longueur d'onde inaccessible ou difficilement accessible aux lasers à dispersion entièrement normale connus de l'art antérieur.

Un objet de l'invention est un oscillateur laser selon la revendication 1.

L'utilisation de deux coeurs (ou plus) couplés optiquement entre eux est doublement avantageuse. D'une part, elle permet d'augmenter la surface modale effective par rapport à une fibre optique conventionnelle comprenant un seul coeur cylindrique au centre de la fibre. D'autre part, il est possible de choisir les paramètres physiques et géométriques d'une telle fibre de manière à obtenir une dispersion chromatique normale d'une valeur très importante, ce qui permet d'étirer fortement les impulsions et par conséquent d'augmenter leur énergie maximale. Par ailleurs, cette dispersion chromatique est pratiquement indépendante de la dispersion du matériau, ce qui supprime les contraintes précitées sur la longueur d'onde d'émission qui affectent les lasers à dispersion entièrement normale et à grande surface modale effective.

Les revendications dépendantes portent sur différents modes de réalisation particuliers d'un tel oscillateur laser.

D'autres caractéristiques, détails et avantages de l'invention ressortiront à la lecture de la description faite en référence aux dessins annexés donnés à titre d'exemple et qui représentent, respectivement :

- La figure 1, le schéma à blocs d'un oscillateur laser selon un mode de réalisation de l'invention ;
- Les figures 2A et 2B, la structure et les caractéristiques d'une fibre optique amplificatrice selon un mode de réalisation de l'invention ;
- Les figures 3A et 3B, l'évolution, en fonction de la puissance de pompage, de l'énergie, de la durée et de la largeur spectrale des impulsions générées par un laser présentant la structure illustrée sur le figure 1 et utilisant, en tant que milieu actif, une fibre optique amplificatrice selon les figures 2A et 2B ;
- Les figures 4A, 4B, 4C et 4D montrent respectivement, les profils temporel et spectral des impulsions émises par ledit laser pour une énergie de 2,5 $\mu J$, le profil temporel obtenu après compensation de la dérive en fréquence, ainsi que la dynamique de ces impulsions à l'intérieur de la cavité de l'oscillateur laser ;
- Les figures 5A et 5B, les profils d'indice de réfraction de deux fibres amplificatrices selon deux autres modes de réalisation de l'invention ;
- La figure 6, le profil d'indice de réfraction d'une fibre optique amplificatrice selon encore un autre mode de réalisation de l'invention ;
- Les figures 7A et 7B, respectivement, les profils temporel et spectral calculés des impulsions émises par un laser présentant la structure illustrée sur la figure 1 et utilisant, en tant que milieu actif, une fibre optique amplificatrice selon la figure 6 pour une énergie de 30 nJ ;
- Les figures 8A et 8B, respectivement, les profils d'autocorrélation et spectral mesurés des impulsions émises par ledit laser pour une énergie de 30 nJ.

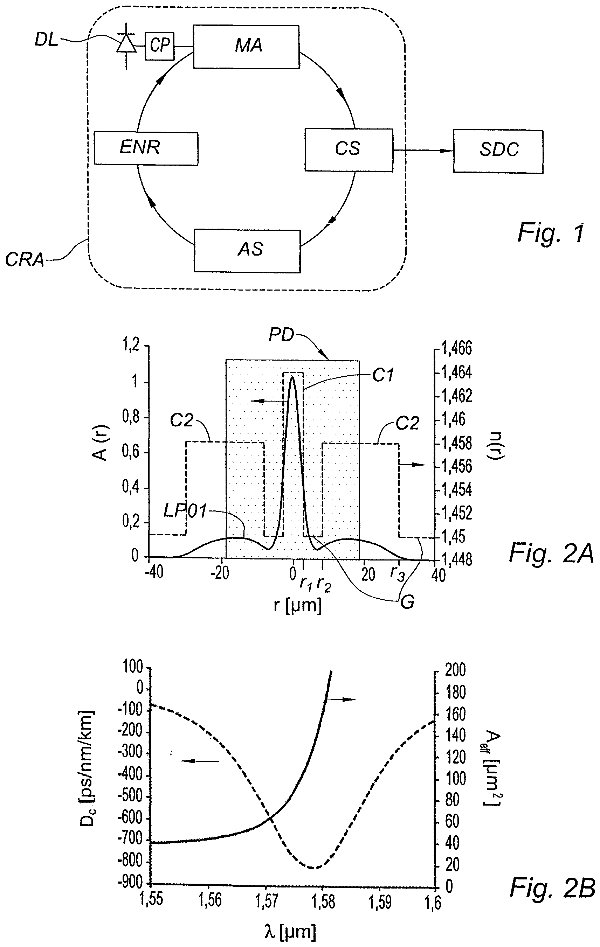

La figure 1 montre le schéma à blocs d'un oscillateur laser avec cavité résonante en anneau CRA selon un mode de réalisation de l'invention. Un tel laser comprend :

- un milieu actif MA, constitué par une fibre optique amplificatrice ; le coupleur CP permet l'injection d'une lumière de pompage générée par une diode laser DL ;
- un coupleur de sortie CS, permettant l'extraction d'une fraction du rayonnement laser généré par l'oscillateur ;
- un absorbant saturable rapide AS, permettant un fonctionnement de l'oscillateur laser en régime de verrouillage des modes ; et
- un élément non réciproque, ou isolateur optique, ENR permettant la propagation de la lumière dans un seul sens (horaire, comme indiqué par les flèches).

A l'extérieur de l'oscillateur proprement dit, un système dispersif SDC, présentant une dispersion anormale, comprime les impulsions extraites par le coupleur de sortie CS, idéalement jusqu'à leur limite de Fourier.

Le système de pompage (coupleur CP, source DL), le coupleur de sortie CS, l'absorbant saturable rapide AS et l'élément non réciproque ENR peuvent être conventionnels et ne seront pas décrits en détail. Dans une solution totalement intégrée, il peut s'agir de dispositifs en fibre optique, reliés entre eux et au milieu amplificateur par une fibre optique à dispersion normale. Le système dispersif SDC de compression des impulsions peut aussi être conventionnel, par exemple réalisé au moyen de réseaux de diffraction et/ou prismes et/ou miroirs à dérive de fréquence (« chirped mirrors »). En fait, ce qui différencie l'oscillateur de la figure 1 d'une source laser à fibre optique du type à dispersion totalement normale, telle que celle décrite par exemple dans le document précité WO 2008/105833, est principalement la structure de la fibre optique amplificatrice MA. Comme cela a été dit plus haut, une telle fibre comprend au moins deux coeurs dans une gaine commune. Chaque coeur, considéré individuellement, présente au moins un mode de propagation. Mais la proximité des coeurs induit un couplage entre leurs modes respectifs, dont résultent des « super-modes ». La forme des coeurs, leurs indices de réfraction et leur agencement relatif constituent des degrés de liberté permettant d'optimiser (en l'espèce, maximiser) la surface modale effective, la dispersion chromatique de ces super-modes à la longueur d'onde d'émission laser et la largeur de la bande dans laquelle la dispersion est fortement normale.

En particulier, la fibre optique amplificatrice MA peut comprendre deux coeurs concentriques : un coeur central de forme cylindrique, semblable à celui d'une fibre optique conventionnelle, et un coeur périphérique annulaire, coaxial audit coeur central. Des fibres optiques de ce type sont connues par elles-mêmes, mais n'ont jamais été proposées en tant que milieu actif pour un laser.

Par exemple, les articles [Thyagarajan 1996], [Auguste 2000], [Février 2002] et [Gérôme 2006] décrivent les propriétés de dispersion de fibres optiques passives (non amplificatrices) présentant deux coeurs concentriques, ainsi que leur utilisation en tant que modules de compensation de la dispersion. Le document [Nielsen 2011] décrit une fibre passive à coeurs concentriques, avec un coeur central multimodal et un coeur annulaire. Le super-mode dit « LP02 », obtenu par couplage du deuxième mode du coeur central avec un mode du coeur annulaire, présente à la fois une forte dispersion modale et une grande aire modale effective. L'inconvénient de cette technique est qu'elle nécessite l'utilisation de deux réseaux à long pas pour convertir le mode fondamental d'une fibre standard vers le super-mode LP02. De ce fait, une utilisation à haute énergie de la fibre est exclue à cause des non-linéarités importantes qui seraient induites dans ces réseaux.

Les documents EP 0 910 141 et WO 01/50639 décrivent des fibres optiques amplificatrices présentant deux coeurs concentriques. Le profil d'indice de réfraction de ces fibres est exploité pour contrôler la dépendance spectrale du gain ; s'agissant de fibres destinées à la transmission de signaux, elles ne sont pas conçues de manière à présenter une dispersion importante, ni une grande surface modale effective. Dans le document WO 01/50639 il est aussi question d'utiliser une telle fibre dans un laser Raman ; mais le principe de fonctionnement d'un tel laser est totalement différent de celui d'un laser « conventionnel », exploitant une émission fluorescente, comme dans le cas de la présente invention. De plus, la fibre à coeurs concentriques est à nouveau utilisée pour ses propriétés de filtrage spectral et pas de dispersion

L'article [Maury 2004] décrit une fibre optique amplificatrice présentant deux coeurs concentriques, une dispersion chromatique normale de valeur élevée et une aire modale effective de 17 $\mu m^2$ à 1,55$\mu m$, soit 7$\lambda^2$. Ici, seul le coeur central est dopé à l'erbium et la dispersion chromatique normale de la fibre est évaluée à -737 ps/nm/km. Cette fibre est destinée à être utilisée pour la compensation de la dispersion chromatique dans les systèmes de communications optiques et, de par sa faible surface modale, n'est pas adaptée à la génération d'impulsions ultra-brèves de hautes énergies.

Sur la figure 2A, la courbe en ligne pointillée montre le profil d'indice de réfraction n(r) d'une fibre MA convenant à la mise en oeuvre de l'invention, constituée de silice et rendue amplificatrice par un dopage en ions erbium (Er$^{3+}$), afin d'obtenir une émission laser à la longueur d'onde précitée de 1,58 $\mu m$.

Cette fibre présente un coeur interne C1 d'un rayon $r_1$ de 3 $\mu m$ et d'indice de réfraction $n_1$=1,464 ; un coeur annulaire C2 avec un rayon interne $r_2$=7$\mu m$ et un rayon externe $r_3$=30$\mu m$, d'indice de réfraction $n_2$=1,458 ; et une gaine G d'indice de réfraction $n_3$=1,45 entre les deux coeurs et à l'extérieur du coeur annulaire. D'une manière conventionnelle, le profil d'indice n(r) est obtenu par dopage en dioxyde de germanium. La ligne continue montre le profil d'amplitude A(r) du super-mode fondamental, indiqué par la suite « SM1 », obtenu par couplage entre le mode unique du coeur central et le mode d'ordre pair le plus bas (ordre zéro) du coeur annulaire, à la longueur d'onde de 1,58 μm. Ce super-mode est principalement concentré dans le coeur central, mais il présente aussi des « ailes » qui s'étendent dans le coeur annulaire. Le couplage de ces mêmes modes fondamentaux donne également un autre super-mode, appelé par la suite « SM2 », non représenté ici et plus concentré dans le coeur annulaire. Le profil de dopage, illustré par la région grisée PD, est conçu de manière à présenter un meilleur recouvrement avec le super-mode SM1 qu'avec le super-mode SM2 ; ainsi, le premier sera amplifié de manière préférentielle. Pour la longueur d'onde d'intérêt (1,58 μm), le facteur de recouvrement du super-mode SM1 est maximisé, et vaut environ 0,75 pour un dopage rectangulaire dans la région $0 < r < (r_2 + r_3)/2$. Dans ces conditions, le facteur de recouvrement du super-mode SM2 vaut environ 0,25 ; le super-mode SM1 est donc largement favorisé.

La figure 2B montre comment la dispersion chromatique $D_c$ (ligne pointillée, échelle de gauche) et la surface modale effective $A_{eff}$ (ligne continue, échelle de droite) pour le super-mode SM1 dépendent de la longueur d'onde λ. A la longueur d'onde laser ($\lambda_{las}$=1,58 μm) la dispersion est négative et prend la valeur de -800 ps/nm/km ; elle se maintient inférieure à -640 ps/nm/km sur une bande spectrale dont la largeur Δλ vaut environ 13 nm. Quant à la surface modale effective, elle prend à la longueur d'onde laser la valeur de 150 μm², soit environ $60\lambda_{las}^2$. Pour λ>1,59 μm environ, le super-mode SM1 se localise essentiellement dans le coeur annulaire et le facteur de recouvrement avec la région dopée décroit fortement ; il n'est donc pas possible d'opérer dans cette région spectrale.

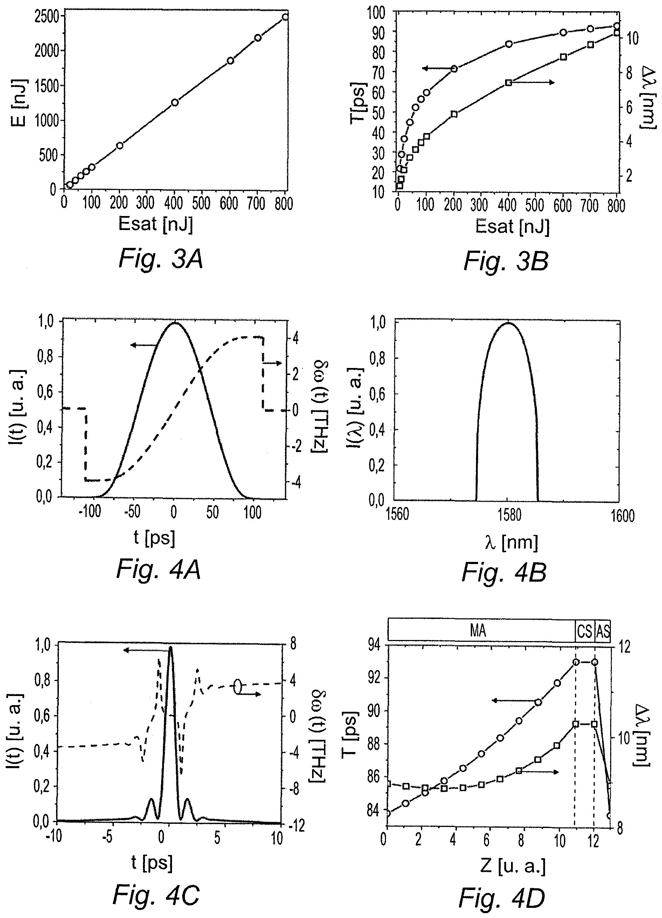

Les figures 3A et 3B montrent comment différentes propriétés (énergie E, durée Δt, largeur spectrale Δλ) des impulsions lasers, générée par l'oscillateur de la figure 1 utilisant en tant que milieu actif la fibre MA de la figure 2, dépendent de l'énergie de saturation du matériau, $E_{sat}$, considérée comme représentative de la puissance de pompage. Ces figures montrent qu'il est possible d'obtenir des impulsions d'une énergie de plusieurs μJ, avec une durée de 20 - 95 ps. Ces impulsions sont fortement étirées, car cette durée doit être comparée avec la durée limitée par transformée de Fourier qui, pour une largeur spectrale d'environ 10 nm, vaut 366 fs à 1,58 μm, en supposant un profil temporel gaussien.

La figure 4A montre le profil temporel d'intensité I(t) (courbe en trait continu, échelle de gauche, en unités arbitraires - « u.a. ») et de fréquence instantanée δω(t) (courbe en trait discontinu, échelle de droite en THz) d'une impulsion d'énergie égale à 2,5 μJ. La durée T de cette impulsion (définie comme sa pleine largeur à mi-hauteur) est d'environ 93 ps. Son étirement peut être expliqué en grande partie par une rampe linéaire de fréquence. Cet étirement est une conséquence inévitable de la forte dispersion chromatique introduite par la fibre amplificatrice et de l'absence de tout élément de compensation à dispersion anormale. En fait, cet étirement est la clé de l'augmentation de l'énergie par impulsion ; si nécessaire, il peut être compensé hors cavité par un système de compression conventionnel. Par ailleurs, le fait de disposer, à la sortie de l'oscillateur, d'impulsions déjà étirées est avantageux si une amplification hors-cavité est nécessaire.

La figure 4B montre le spectre $I_\lambda(\lambda)$ de l'impulsion de la figure 4A. On peut remarquer que ce spectre est très régulier et symétrique, sans modulations et/ou asymétries induites par des effets non-linéaires. Par ailleurs, il présente une allure sensiblement parabolique, ce qui traduit une propagation similaritonique.

La figure 4C montre le profil temporel d'intensité I(t) obtenu après compensation de la dérive en fréquence des impulsions de la figure 4A. La durée de l'impulsion est alors raccourcie à 950 fs. Elle vaut 1,33 fois la durée obtenue en effectuant la transformée de Fourier du spectre de la figure 4C en supposant une phase nulle, ce qui montre que la dérive en fréquence est majoritairement linéaire.

La figure 4D illustre l'évolution de la largeur spectrale (échelle de droite) et de la durée (échelle de gauche) de l'impulsion en fonction de la position z dans la cavité. On peut voir que, conformément au principe des oscillateurs laser à dispersion entièrement normale, la durée de l'impulsion augmente de manière monotone à l'intérieur de la fibre amplificatrice (MA), se stabilise dans le coupleur de sortie (CS) et est sensiblement réduite par l'absorbant saturable rapide (AS).

Le tableau ci-après permet de comparer l'oscillateur laser selon le mode de réalisation de l'invention qui vient d'être décrit avec deux réalisations de l'art antérieur, décrites dans les références précitées [Baumgartl 2011] et [Chichkov 2010]. Pour chaque laser sont indiqués la longueur d'onde d'émission $\lambda_0$ (en μm), l'ion de terre rare utilisé comme dopant pour introduire un gain optique, la surface modale effective $A_{eff}$ (en μm²), la dispersion $D_c$ (en ps/nm/km), la largeur de bande maximale des impulsions Δλ (en nm), ainsi que l'énergie E des impulsions obtenues (en μJ). Par ailleurs, chaque laser est caractérisé par un « chiffre de mérite » FOM, mesuré en μJ, défini par FOM = $6\pi c|D_c|^2 \cdot \Delta\lambda^3/(\lambda_0^2 \cdot \gamma \cdot g)$, où c est la célérité de la lumière dans le vide, g le gain faible signal supposé fixe et égal à 1,6

$$\gamma = \frac{n_2 \omega_0}{c A_{eff}}.$$

m⁻¹ pour toutes les configurations et La largeur spectrale des impulsions est limitée soit par la largeur de la bande de gain $\Delta\lambda_g$ soit par la largeur de la bande de dispersion $\Delta\lambda_d$ définie à 0,8 $D_{cmax}$ ($D_{Cmax}$ étant la valeur maximale, en valeur absolue, du paramètre de dispersion chromatique $D_c$) : $\Delta\lambda = \min(\Delta\lambda_g, \Delta\lambda_d)$. La largeur de bande de dispersion $\Delta\lambda_d$ est définie à $0,8D_{cmax}$ pour s'affranchir des effets de la dispersion d'ordre supérieur notamment la dispersion d'ordre 3 ($\beta_3 = \partial\beta_2/\partial\omega$). Le chiffre de mérite est proportionnel à l'énergie maximale des impulsions de sortie dans le cas d'une amplification en régime parabolique (voir l'article [Deng 2009]) : en effet, cette énergie est d'autant plus élevée que la dispersion est importante, que la bande spectrale est large est que la surface modale effective est grande.

| Oscillateur | $\lambda_0$ | Ion | $A_{eff}$ | $D_c$ | $\Delta\lambda$ | Energie | FOM |
|---|---|---|---|---|---|---|---|
| [Baumgartl 2011] | 1,04 | $Yb^{3+}$ | 1320 | -30 | 40 | 0,5 | 1,34 |
| [Chichkov 2010] | 1,55 | $Er^{3+}$ | 12,6 | -28 | 30 | 0,02 | $2.10^{-3}$ |
| | | | | | | | |
| Invention | 1,04 | $Yb^{3+}$ | 100 | -180 | 26 | 0,8 | 0,97 |
| Invention | 1,58 | $Er^{3+}$ | 120 | -640 | 13 | 2,5 | 1,28 |
| Invention | 2 | $Tm^{3+}$ | 140 | -210 | 40 | 2,6 | 3,2 |

L'énergie extraite de l'oscillateur selon l'invention est cinq fois celle obtenue selon [Baumgartl 2011], malgré une surface modale effective sensiblement inférieure et un chiffre de mérite légèrement plus faible. En effet, l'écart de surface modale est plus que compensé par la valeur beaucoup plus importante de la dispersion qui, dans [Baumgartl 2011], est dictée par les propriétés du matériau. On remarquera par ailleurs que, justement pour cette raison, le laser de [Baumgartl 2011] ne peut pas utiliser un dopage en $Er^{3+}$ pour émettre autour de 1,55 $\mu$m, ni en $Tm^{3+}$ pour émettre autour de 2 $\mu$m. Celui de [Chichkov 2010] émet à 1,55 $\mu$m, mais l'énergie qu'il permet d'atteindre est inférieure de deux ordres de grandeur à celle obtenue grâce à l'invention.

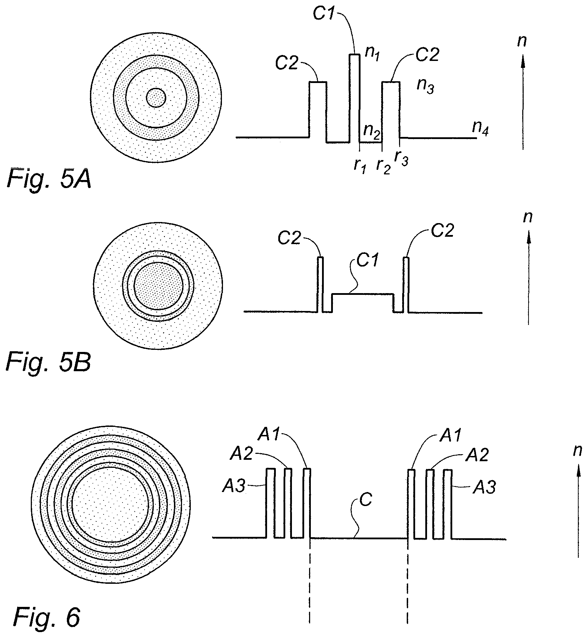

L'invention n'est pas limitée à l'utilisation de fibres optiques amplificatrices présentant un profil d'indice de réfraction du type illustré sur la figure 2A. Les figures 5A et 5B illustrent deux autres exemples de profils d'indice de réfraction qui conviennent à la mise en oeuvre de l'invention. Dans le cas de la figure 5A, la partie externe de la gaine ($r>r_3$) présente un indice de réfraction différent (plus bas : $n_4<n_2$) que la partie interne ($r_1<r<r_2$) ; dans le cas de la figure 5B, le coeur central est plus large et faiblement guidant ($n_1<n_3$) afin de maximiser la surface modale effective tout en permettant un fonctionnement unimodal. Ces profils, comme celui de la figure 2A, sont du type dit « en W ». Mais des structures encore différentes peuvent être utilisées, telles que des fibres « solides » (entièrement en verre, par opposition aux fibres à cristal photoniques constituées de verre et air) à bande interdite photonique, dont le profil d'indice de réfraction est illustré de manière schématique sur la figure 6. Dans une telle fibre, l'indice de réfraction du coeur C peut être le même que celui de la gaine ou légèrement supérieur, le guidage étant assuré uniquement ou principalement par la bande interdite crée par les paires d'anneaux concentriques A1, A2, A3, A4, A5 d'indice de réfraction alternativement haut et bas. Pour la mise en oeuvre de l'invention, l'anneau le plus interne (A1) peut servir de deuxième coeur ; le super-mode exploité est obtenu par le couplage du mode d'ordre le plus bas du coeur central et d'un mode impair de l'anneau A1. L'invention a été testée expérimentalement en utilisant une fibre dopée à l'ytterbium présentant le même profil d'indice de réfraction que la fibre passive décrite en détail dans l'article [Gérôme 2007]. La dispersion est très élevée ($D_c$=-1500 ps/nm/km à la longueur d'onde $\lambda_0$=1,04 $\mu$m), mais les performances sont limitées par une plage spectrale utile relativement étroite, $\Delta\lambda_d$=1 nm, ce qui conduit à un chiffre de mérite FOM = $10^{-2}$ et à des impulsions dont l'énergie est au plus de quelques dizaines de nano-joules. Il faut dire que la fibre n'était pas optimisée pour cette application spécifique ; en fait, il est remarquable qu'un fonctionnement stable en régime de verrouillage de modes soit obtenu avec une bande spectrale utile aussi étroite.

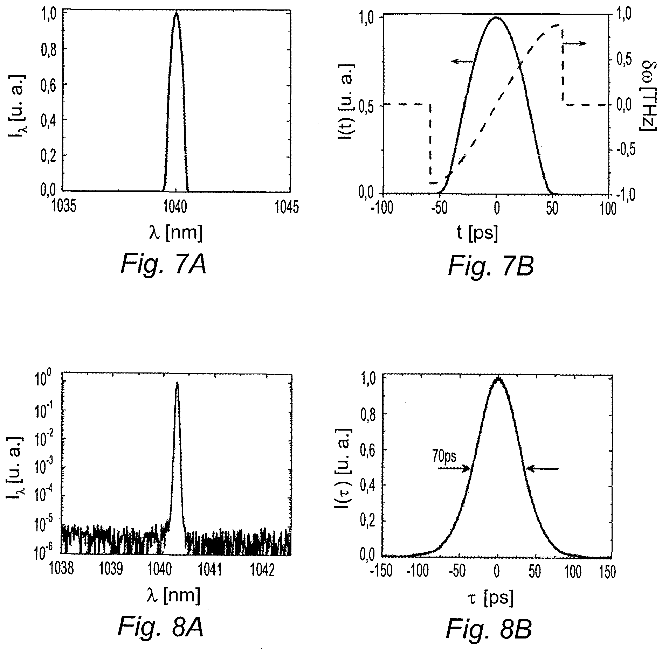

Les figures 7A et 7B montrent les profils temporel et spectral calculés des impulsions pour une énergie de sortie de 30 nJ. Les impulsions calculées présentent un spectre étroit de 0,69 nm de largeur à mi-hauteur pour une largeur temporelle de 56 ps. Les impulsions présentent une forte dérive en fréquence linéaire.

Les figures 8A et 8B montrent le spectre $I_\lambda(\lambda)$ et la trace d'autocorrélation ($I_{AC}$, fonction du retard $\tau$) mesurés à la sortie de l'oscillateur, également pour des impulsions d'une énergie de 30 nJ. La largeur à mi-hauteur de la trace d'auto-corrélation est de 70 ps, ce qui correspond à des impulsions de 50 ps de durée en supposant un profil gaussien. Ces résultats expérimentaux sont en très bon accord avec les prédictions numériques des figures 7A et 7B.

L'objet de l'invention n'est pas limité aux modes de réalisations décrits ci-dessus. Différentes structures de fibres optiques peuvent être utilisées, à condition de comporter au moins deux coeurs couplés optiquement entre eux dans une gaine commune ; ces fibres peuvent être réalisées en différents matériaux et présenter des dopages autres que par des ions erbium et ytterbium. Ces fibres peuvent être intégrées dans des oscillateurs ne présentant pas nécessairement l'architecture de la figure 1 (en particulier, la cavité ne doit pas nécessairement être en anneau). Toute technique de verrouillage des modes (absorbant rapide, absorbant lent, verrouillage actif par un modulateur...) peut être utilisée, et d'ailleurs un oscillateur laser selon l'invention ne doit pas nécessairement fonctionner en régime de verrouillage des modes, bien que la génération d'impulsions ultra-brèves soit l'application visée à titre principal.

Références :

[IIday 2004] :F. Ö. IIday et al. « Self-Similar Evolution of Parabolic Pulses in a Laser », Phys. Rev. Lett. 92, 213902 (2004).

[Ortaç 2009]: B. Ortaç et al. « Approaching microjoule-level pulse energy with mode-locked femtosecond fiber laser », Optics Letters 34, No. 10, pages 1585 - 1587 (2009).

[Baumgartl 2011] M. Baumgartl et al. « High average and peak power femtosecond large-pitch photonic-crystal-fiber laser », Optics Letters 36, No. 2, pages 244-246 (2011)

[Thyagarajan 1996] : K. Thyagarajan et al. « A Novel Design of a Dispersion Compensating Fiber », IEEE Photonics Technology Letters Vol. 8, No. 11, novembre 1996, pages 1510 - 1512.

[Auguste 2000] : J.-L. Auguste et al. « -1800 ps/(nm.km) chromatic dispersion at 1.55 $\mu$m in dual concentric core fibre », Electronics Letters, Vol. 36, No. 2, 28 septembre 2000, pages 1689-1691.

[Février 2002] : S. Février et al. « Accurate tuning of the highly-negative-chromatic-dispersion wavelength into a dual concentric core fibre by macro-bending », Proceedings of the ECOC 2002, Copenhagen, Danemark.

[Gérôme 2006] : F. Gérôme et al. « Theoretical and Experimental Analysis of a Chromatic Dispersion Compensating Module Using a Dual Concentric Core Fiber », Journal of Lightwave Technology Vol. 24, No. 1, janvier 2006, page 442 - 448.

[Nielsen 2011] L. Grüner-Nielsen et al. «A Dispersion Compensating Fiber with a Factor 5 Improvement in Figure of Merit and a Factor 4.5 Improvement in Effective Area », OFC-NFOEC'2011, Los Angeles, March 6-10, 2011, Paper OWA1.

[Deng 2009] Y. Deng et al., « Generation of sub-50 fs pulses from a high-power Yb-doped fiber amplifier », Optics Letters Vol. 34, No. 22, 3469-3471 (2009)

[Gérôme 2007]: F. Gérôme et al. « Highly dispersive large mode area photonic bandgap fiber », Optics Letters Vol. 32, No. 10, 15 mai 2007, page 1208 - 1210.

[Chichkov 2010] A. Chichkov et al. « High-power dissipative solitons from an all-normal dispersion erbium fiber oscillator », Optics Letters 35, No. 16, pages 2807-2809 (2010).

[Maury 2004] J. Maury et al. « Conception and characterization of a dual-concentric-core erbium-doped dispersion-compensating fiber », Optics Letters, Vol. 29, No. 7, pages 700-702 (2004).

[Fang 2011] Fang, X., Hu, M., Xie, C., Song, Y., Chai, L., & Wang, C. (2011). High pulse energy mode-locked multicore photonic crystal fiber laser. Optics Letters, 36(6)

[Lenz 1995] G. Lenz et al. « All-solid-state femtosecond source at 1.55 $\mu$m », Optics Letters, Vol. 20, No. 11, pages 1289-1291 (1995).

**Revendications**

**1.** Oscillateur laser comprenant une fibre optique amplificatrice dopée (MA) insérée dans une cavité résonante pour servir de milieu actif, ainsi que des moyens de pompage (DL, CP) pour provoquer une inversion de population dans ladite fibre optique amplificatrice, ladite fibre optique amplificatrice comporte au moins deux coeurs (C1, C2) couplés optiquement entre eux dans une gaine commune (G) et supportant des super-modes, **caractérisé en ce que** lesdits coeurs présentent des formes, des dimensions, des indices de réfraction et un agencement relatif desdits coeurs pour supporter des super-modes dont au moins un (SM1) présente, dans une bande spectrale d'émission dudit oscillateur laser, une dispersion chromatique normale inférieure ou égale à -100 ps/nm/km et **en ce que** ladite fibre optique amplificatrice comprend un coeur central (C1) et au moins un coeur périphérique annulaire (C2), entourant ledit coeur central et présente un dopage dont la distribution spatiale est choisie de manière à assurer une amplification préférentielle dudit super-mode présentant, dans ladite bande spectrale d'émission de l'oscillateur laser, une dispersion chromatique normale.

**2.** Oscillateur laser selon la revendication 1, dans lequel les formes, les dimensions, les indices de réfraction et l'agencement relatif des coeurs de ladite fibre optique amplificatrice sont choisis de telle manière que ledit super-mode présente, dans ladite bande spectrale d'émission, une dispersion chromatique normale inférieure ou égale à -700 ps/nm/km.

**3.** Oscillateur laser selon l'une des revendications précédentes dans lequel les formes, les dimensions, les indices de réfraction et l'agencement relatif des coeurs de ladite fibre optique amplificatrice sont choisis de telle manière que ledit super-mode présente, dans ladite bande spectrale d'émission, une surface modale effective supérieure ou égale à 50$\lambda^2$, $\lambda$ étant la longueur d'onde centrale de ladite bande spectrale d'émission.

4. Oscillateur laser selon l'une des revendications précédentes, dans lequel ladite fibre amplificatrice présente une bande de dispersion chromatique normale dont la largeur à 0,8 fois la valeur maximale, est supérieure ou égale à 1 nm, et de préférence supérieure ou égale à 10 nm.

5. Oscillateur laser selon l'une des revendications précédentes, dans lequel ledit coeur central est unimodal dans ladite bande spectrale d'émission.

6. Oscillateur laser selon l'une des revendications précédentes, dans lequel ladite fibre optique amplificatrice est en silice.

7. Oscillateur laser selon l'une des revendications précédentes, dans lequel ladite fibre optique amplificatrice est dopée de manière à présenter un gain optique dans une région spectrale dans laquelle la dispersion du matériau dont elle est constituée est anormale.

8. Oscillateur laser selon l'une des revendications précédentes, dans lequel ladite fibre optique amplificatrice est en silice, dopée avec des ions erbium ou thulium.

9. Oscillateur laser selon l'une des revendications précédentes, comprenant également un absorbant saturable rapide (AS) pour induire un fonctionnement en régime de verrouillage de modes.

10. Oscillateur laser selon la revendication 9, dont la cavité résonante présente une dispersion entièrement normale dans ladite bande spectrale d'émission.

11. Oscillateur laser selon l'une des revendications précédentes dans lequel ladite cavité résonante est en anneau et contient un isolateur optique (ENR) pour en permettre un fonctionnement unidirectionnel.

12. Oscillateur laser selon la revendication 11 dans lequel ladite cavité résonante en anneau est entièrement réalisée en fibre optique.


## Patentansprüche

1. Laseroszillator, welcher einen dotierten Verstärkungs-Lichtwellenleiter (MA) beinhaltet, welcher in einen Resonanzhohlraum eingelegt ist, um als aktives Medium zu dienen, sowie Pumpmittel (DL, CP) zum Herbeiführen einer Besetzungsinversion in dem Verstärkungs-Lichtwellenleiter, wobei der Verstärkungs-Lichtwellenleiter mindestens zwei Kerne (C1, C2) beinhaltet, welche optisch miteinander in einer gemeinsamen Ummantelung (G) gekoppelt sind und Supermoden unterstützen, **dadurch gekennzeichnet, dass** die Kerne Formen, Abmessungen, Brechungsindizes und eine relative Anordnung der Kerne aufweisen, um Supermoden zu unterstützen, von denen mindestens einer (SM1) in einem Emissionsspektralband des Laseroszillators eine normale chromatische Streuung aufweist, welche kleiner oder gleich -100 ps/nm/km beträgt und dadurch, dass der Verstärkungs-Lichtwellenleiter einen mittleren Kern (C1) und mindestens einen umlaufenden ringförmigen Kern (C2) beinhaltet, welcher den mittleren Kern umgreift und eine Dotierung aufweist, deren räumliche Verteilung so gewählt ist, dass eine bevorzugte Verstärkung desjenigen Supermodus sichergestellt wird, welcher in dem Emissionsspektralband des Laseroszillators eine normale chromatische Streuung aufweist.

2. Laseroszillator nach Anspruch 1, bei welchem die Formen, Abmessungen, Brechungsindizes und relative Anordnung der Kerne des Verstärkungs-Lichtwellenleiters so gewählt sind, dass der Supermodus in dem Emissionsspektralband eine normale chromatische Streuung aufweist, welche kleiner oder gleich -700 ps/nm/km ist.

3. Laseroszillator nach einem der vorhergehenden Ansprüche, bei welchem die Formen, Abmessungen, Brechungsindizes und relative Anordnung der Kerne des Verstärkungs-Lichtwellenleiters so gewählt sind, dass der Supermodus in dem Emissionsspektralband eine effektive modale Fläche aufweist, welche größer als oder gleich 50 $\lambda^2$ ist, wobei $\lambda$ die zentrale Wellenlänge des Emissionsspektralbandes ist.

**4.** Laseroszillator nach einem der vorhergehenden Ansprüche, bei welchem der Verstärkungs-Lichtwellenleiter ein normales chromatisches Streuungsband aufweist, dessen Breite bei 0,8 Mal Maximalwert größer als oder gleich 1 nm, und vorzugsweise größer als oder gleich 10 nm ist.

**5.** Laseroszillator nach einem der vorhergehenden Ansprüche, bei welchem der mittlere Kern in dem Emissionsspektralband ein Monomode-Kern ist.

**6.** Laseroszillator nach einem der vorhergehenden Ansprüche, bei welchem der Verstärkungs-Lichtwellenleiter aus Silizium besteht.

**7.** Laseroszillator nach einem der vorhergehenden Ansprüche, bei welchem der Verstärkungs-Lichtwellenleiter so dotiert ist, dass er eine optische Verstärkung in einem Spektralbereich aufweist, in welchem die Streuung des Materials, aus welchem er besteht, anormal ist.

**8.** Laseroszillator nach einem der vorhergehenden Ansprüche, bei welchem der Verstärkungs-Lichtwellenleiter aus Silizium besteht und mit Erbium- oder Thulium-Ionen dotiert ist.

**9.** Laseroszillator nach einem der vorhergehenden Ansprüche, ebenfalls beinhaltend einen schnell sättigbares Absorbtionsmaterial (AS), um einen modengekoppelten Betrieb zu induzieren.

**10.** Laseroszillator nach Anspruch 9, dessen Resonanzhohlraum eine in dem Emissionsspektralband vollkommen normale Streuung aufweist.

**11.** Laseroszillator nach einem der vorhergehenden Ansprüche, bei welchem der Resonanzhohlraum ringförmig ist und einen optischen Isolator (ENR) beinhaltet, um einen unidirektionalen Betrieb zu ermöglichen.

**12.** Laseroszillator nach Anspruch 11, bei welchem der ringförmige Resonanzhohlraum vollständig aus einem Lichtwellenleiter besteht.

**Claims**

**1.** A laser oscillator, comprising a doped amplifying optical fiber (MA) inserted into a resonant cavity to serve as active medium, and a pumping system (DL, CP) to provoke a population inversion in said amplifying optical fiber, wherein said amplifying optical fiber comprises at least two cores (C1, C2) optically coupled to one another in a common cladding (G), and supporting super modes, **characterized in that** said cores exhibit shapes, dimensions, refractive indices, and a relative arrangement of said cores to support super modes, at least one of which (SM1) exhibiting, in an emission spectral band of said laser oscillator, a normal chromatic dispersion of less than or equal to -100 ps/nm/km and **in that** the amplifying optical fiber comprises a central core (C1) and at least one annular peripheral core (C2), surrounding said central core and has a doping with a spatial distribution chosen so as to ensure a preferential amplification of said super mode exhibiting, in said emission spectral band of the laser oscillator, a normal chromatic dispersion.

**2.** The laser oscillator as claimed in claim 1, in which the shapes, the dimensions, the refractive indices, and the relative arrangement of the cores of said amplifying optical fiber are chosen such that said super mode exhibits, in said emission spectral band, a normal chromatic dispersion of less than or equal to -700 ps/nm/km.

**3.** The laser oscillator as claimed in any one of the preceding claims , in which the shapes, the dimensions, the refractive indices and the relative arrangement of the cores of said amplifying optical fiber are chosen such that said super mode exhibits, in said emission spectral band, an effective modal surface greater than or equal to $50\lambda^2$, $\lambda$ being the central wavelength of said emission spectral band.

**4.** The laser oscillator as claimed in any one of the preceding claims, in which said amplifying fiber exhibits a normal chromatic dispersion band with a width at 0.8 times the maximum value, of greater than or equal to 1 nm and preferably of greater than or equal to 10 nm.

**5.** The laser oscillator as claimed in in any one of the preceding claims, in which said central core is unimodal in said emission spectral band.

6. The laser oscillator as claimed in any one of the preceding claims, in which said amplifying optical fiber is made of silica.

7. The laser oscillator as claimed in any one of the preceding claims, in which said amplifying optical fiber is doped so as to exhibit an optical gain in a spectral region in which the dispersion of the material of which it is made is abnormal.

8. The laser oscillator as claimed in any one of the preceding claims, in which said amplifying optical fiber is made of silica, doped with erbium or thulium ions.

9. The laser oscillator as claimed in any one of the preceding claims, also comprising a fast saturable absorber (AS) to induce operation in mode-locking regime.

10. The laser oscillator as claimed in claim 9, in which the resonant cavity exhibits an all-normal dispersion in said emission spectral band.

11. The laser oscillator as claimed in any one of the preceding claims, in which said resonant cavity is in the form of a ring and contains an optical isolator (ENR) to allow unidirectional operation thereof.

12. The laser oscillator as claimed in claim 11, in which said resonant cavity in the form of a ring is entirely produced of optical fiber.

Fig. 1

Fig. 2A

Fig. 2B

Fig. 3A

Fig. 3B

Fig. 4A

Fig. 4B

Fig. 4C

Fig. 4D

Fig. 5A

Fig. 5B

Fig. 6

Fig. 7A

Fig. 7B

Fig. 8A

Fig. 8B

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1236249 A
- US 5450427 A
- US 5513194 A
- US 7436862 B
- WO 2008105833 A
- EP 0910141 A
- WO 0150639 A

**Littérature non-brevet citée dans la description**

- **F. Ö. IIDAY et al.** Self-Similar Evolution of Parabolic Pulses in a Laser. *Phys. Rev. Lett.,* 2004, vol. 92, 213902
- **B. ORTAÇ et al.** Approaching microjoule-level pulse energy with mode-locked femtosecond fiber laser. *Optics Letters,* 2009, vol. 34 (10), 1585-1587
- **M. BAUMGARTL et al.** High average and peak power femtosecond large-pitch photonic-crystal-fiber laser. *Optics Letters,* 2011, vol. 36 (2), 244-246
- **K. THYAGARAJAN et al.** A Novel Design of a Dispersion Compensating Fiber. *IEEE Photonics Technology Letters,* 11 Novembre 1996, vol. 8, 1510-1512
- **J.-L. AUGUSTE et al.** 1800 ps/(nm.km) chromatic dispersion at 1.55 $\mu$m in dual concentric core fibre. *Electronics Letters,* 28 Septembre 2000, vol. 36 (2), 1689-1691
- **S. FÉVRIER et al.** Accurate tuning of the highly-negative-chromatic-dispersion wavelength into a dual concentric core fibre by macro-bending. *Proceedings of the ECOC,* 2002
- **F. GÉRÔME et al.** Theoretical and Experimental Analysis of a Chromatic Dispersion Compensating Module Using a Dual Concentric Core Fiber. *Journal of Lightwave Technology,* Janvier 2006, vol. 24 (1), 442-448
- **L. GRÜNER-NIELSEN et al.** A Dispersion Compensating Fiber with a Factor 5 Improvement in Figure of Merit and a Factor 4.5 Improvement in Effective Area. *OFC-NFOEC'2011,* 2011
- **Y. DENG et al.** Generation of sub-50 fs pulses from a high-power Yb-doped fiber amplifier. *Optics Letters,* 2009, vol. 34 (22), 3469-3471
- **F. GÉRÔME et al.** Highly dispersive large mode area photonic bandgap fiber. *Optics Letters,* 15 Mai 2007, vol. 32 (10), 1208-1210
- **A. CHICHKOV et al.** High-power dissipative solitons from an all-normal dispersion erbium fiber oscillator. *Optics Letters,* 2010, vol. 35 (16), 2807-2809
- **J. MAURY et al.** Conception and characterization of a dual-concentric-core erbium-doped dispersion-compensating fiber. *Optics Letters,* 2004, vol. 29 (7), 700-702
- **FANG, X. ; HU, M. ; XIE, C. ; SONG, Y. ; CHAI, L. ; WANG, C.** High pulse energy mode-locked multicore photonic crystal fiber laser. *Optics Letters,* 2011, vol. 36 (6
- **G. LENZ et al.** All-solid-state femtosecond source at 1.55 $\mu$m. *Optics Letters,* 1995, vol. 20 (11), 1289-1291